**Europäisches Patentamt**

**European Patent Office**

**Office européen des brevets**

(19)

(11) Veröffentlichungsnummer: **0 278 028**
**B1**

(12)

# EUROPÄISCHE PATENTSCHRIFT

(45) Veröffentlichungstag der Patentschrift:
25.04.90

(21) Anmeldenummer: 87101785.1

(22) Anmeldetag: 09.02.87

(51) Int. Cl.⁴: **G11B 5/706,** H01F 1/06,
C01G 49/02, B22F 9/22

(54) **Verfahren zur Herstellung von im wesentlichen aus Eisen bestehenden nadelförmigen ferromagnetischen Metallteilchen.**

(43) Veröffentlichungstag der Anmeldung:
17.08.88 Patentblatt 88/33

(45) Bekanntmachung des Hinweises auf die Patenterteilung:
25.04.90 Patentblatt 90/17

(84) Benannte Vertragsstaaten:
DE FR GB NL

(56) Entgegenhaltungen:
EP-A- 0 015 485
DE-A- 3 603 431
US-A- 4 305 753

(73) Patentinhaber: BASF Aktiengesellschaft,
Carl-Bosch-Strasse 38, D-6700 Ludwigshafen(DE)

(72) Erfinder: Hoppe, Klaus-Dieter, Dr., Mandelring 17,
D-6706 Wachenheim(DE)
Erfinder: Kovacs, Jenoe, Dr., Kantstrasse 9,
D-6717 Hessheim(DE)
Erfinder: Feser, Rainer, Dr., Colgensteiner Weg 25,
D-6718 Gruenstadt(DE)
Erfinder: Jakusch, Helmut, Dr., Lorscher Ring 6,
D-6710 Frankenthal(DE)
Erfinder:
Der weitere Erfinder hat auf seine Nennung verzichtet

**Beschreibung**

Die Erfindung betrifft ein Verfahren zur Herstellung von im wesentlichen aus Eisen bestehenden ferromagnetischen Metallteilchen, ausgehend von einem nadelförmigen α-FeOOH, das nach einer formstabilisierenden Ausrüstung auf der Teilchenoberfläche bei 500 bis 850°C getempert und anschließend mittels gasförmiger Reduktionsmittel bei 200 bis 500°C zum Metall reduziert wird, wobei das eingesetzte α-FeOOH in Anwesenheit von Zink- und Phosphationen hergestellt wird.

Hochkoerzitive Eisenteilchen für magnetische Aufzeichnungsträger werden u.a. durch Reduktion feinverteilter, nadelförmiger Eisenverbindungen, wie z.B. der Oxide oder Oxidhydroxide, mit Wasserstoff oder anderen gasförmigen Reduktionsmitteln erhalten. Bevorzugt werden Fe(III)-Oxidhydroxide eingesetzt, aus denen durch Temperung und Reduktion sowie anschließende Passivierung die entsprechenden Eisenteilchen hergestellt werden.

Die guten magnetischen Eigenschaften und insbeondere die hohe Koerzitivfeldstärke von nadelförmigen Eisen-Teilchen beruhen trotz des kubischen Kristallgitters im wesentlichen auf der Formanisotropie, d.h. die Nadelform der Teilchen ist ausschlaggebend für die magnetischen Eigenschaften. Um den bei der Umwandlung der nadelförmigen Fe(III)-Oxidhydroxide auftretenden Formverlust so gering wie möglich zu halten und Versinterungen zu vermeiden, werden die Eisenoxidhydroxid-Teilchen vor dieser Umwandlung mit einem formstabilisierenden Überzug versehen. Von entscheidender Bedeutung ist jedoch die richtige Einstellung der Geometrie schon während der FeOOH-Synthese.

Die Herstellung von FeOOH kann z.B. nach dem sogenannten sauren Verfahren erfolgen. Hierbei wird von einer wäßrigen Fe(II)-Salzlösung ausgegangen, der ggf. noch weitere Ionen zugesetzt werden. Durch den Zusatz dieser Fremdionen läßt sich die Geometrie der FeOOH-Teilchen beeinflussen. Zu Beginn der Synthese wird ein Teil des Fe(II) mit Lauge ausgefällt. Anschließend erfolgt die Oxidation, z.B. durch Einleiten von Luft, zu FeOOH. Die dabei freiwerdenden Protonen werden zunächst durch den sich auflösenden Fe(II)-Hydroxid-Niederschlag abgefangen, so daß der pH-Wert nicht unter 5 sinkt. Hat sich dann der Fe(II)-Hydroxid-Niederschlag vollständig aufgelöst, tritt ein starker Abfall des pH-Werts ein und die Bildung von FeOOH kommt praktisch zum Erliegen. Diesen ersten Teil der FeOOH-Synthese bezeichnet man als Keimphase. Das nun noch in Lösung befindliche Fe(II) wird anschließend mit Oxidationsmitteln, z.B. Luft, unter gleichzeitiger kontinuierlicher Zugabe von Lauge zu FeOOH oxidiert, welches auf den vorhandenen Keimen aufwächst. Nach beendeter Synthese wird das FeOOH mit einem formstabilisierenden Überzug versehen. Dieses Verfahren ist bekannt (u.a. US-PS 2 694 656, DE-B 1 061 760) und in vielerlei Weise abgewandelt und zusätzlich modifiziert worden (u.a. GB-A 2 016 526, EP-A 41 257, DE-B 1 176 111, DE-B 2 347 486, DE-B 2 909 480). Für die sich an die Synthese der α-FeOOH-Teilchen anschließenden Formstabilisierung wurden bereits die Verwendung von Phosphaten und Boraten (DE-A 2 743 298), Erdalkalimetallverbindungen in Verbindung mit Carbonsäuren (DE-A 2 434 096) oder Phosphaten (US-A 4 209 412), Zinnverbindungen (DE-C 1 907 691) sowie Verbindungen des Siliciums und/oder Aluminiums (EP-A 56 257, DE-A 3 044 772, US-B 4 133 677) vorgeschlagen. Aus der US-B 4 305 753 ist auch ein Verfahren zur Herstellung von im wesentlichen aus Eisen bestehenden nadelförmigen ferromagnetischen Metallteilchen durch Hinzufügen von Nickel- und/oder Kobaltsalzen zu einer wäßrigen, Zn-Ionen enthaltenden α-FeOOH-Suspension, Umhüllen der α-FeOOH-Teilchen mit Nickel- und/oder Kobalthydroxid sowie Tempern des formstabilisierend ausgerüsteten α-FeOOH bei 500 bis 700°C während 10 bis ≥ 720 Minuten und anschließende Reduktion des resultierenden Materials zum Metall mittels gasförmiger Reduktionsmittel bei Temperaturen zwischen 250 und 500°C bekannt. Ebenso ist auch die Entwässerung und/oder Temperung des α-FeOOH beschrieben (u.a. EP-A 24 692, EP-A 24 694, EP-A 56 257, US-A 3 702 270). Die Reduktion der daraus resultierenden Eisenoxidteilchen zum Metall erfolgt üblicherweise mittels gasförmiger Reduktionsmittel, meist Wasserstoff (US-A 2 879 154).

Aus der Vielzahl der angegebenen und möglichen Parameter bei der Herstellung von nadelförmigen ferromagnetischen Eisenteilchen wird ersichtlich, daß die Versuche zur Herstellung dieser Teilchen, insbesondere im Hinblick auf die hohen Anforderungen an das für magnetische Aufzeichnungsträger geeignete Material, unübersichtlich und aufwendig sind.

Es bestand daher die Aufgabe, durch das Bereitstellen eines einfachen Verfahrens zur Herstellung von im wesentlichen aus Eisen bestehenden nadelförmigen ferromagnetischen Metallteilchen, die Eigenschaften dieser Teilchen zu verbessern, insbesondere Teilchen zu erhalten, die eine hohe Koerzitivfeldstärke von mindestens 105 kA/m und eine große Feinteiligkeit aufweisen und sich zudem noch leicht in die Bindemittel für eine Magentschicht einarbeiten lassen.

Es wurde nun gefunden, daß sich die Aufgabe mit einem Verfahren zur Herstellung von im wesentlichen aus Eisen bestehenden nadelförmigen ferromagnetischen Metallteilchen durch stufenweises Ausfällen von α-FeOOH in wäßriger Phase, wobei in einer ersten Stufe aus einer wäßrigen, bezogen auf die Menge des stöchiometrisch entstehenden FeOOH, 0,1 bis 4,0 Gew.-% Zink- und 0,01 bis 3,0 Gew.-% Phosphationen in einem Gewichts-Verhältnis der Zink- und Phosphationen von größer 5 enthaltenden Eisen(II)salzlösung durch Zugabe von wäßrigen Laugen 30 bis 70% der Eisen(II)ionen ausgefällt, dann in einer zweiten Stufe mit Hilfe von Oxiationsmitteln der Niederschlag in α-FeOOH-Keime überführt und anschließend in einer dritten Stufe zu dieser Suspension bei einem pH-Wert von kleiner 4,0 0,1 bis 4,0 Gew.-%, bezogen auf die Menge an FeOOH-Endprodukt, an Phosphationen zugesetzt und anschlie-

2

ßend die restlichen Eisen(II)ionen unter erneutem Zusatz von Oxidationsmittel und Lauge auf die $\alpha$-FeOOH-Keime niedergeschlagen werden, Hinzufügen von Nickel- und/oder Kobaltsalzen zu der resultierenden $\alpha$-FeOOH-Suspension bei einem pH von größer 8,0 und Umhüllen der $\alpha$-FeOOH-Teilchen mit Nickel- und/oder Kobalthydroxid sowie anschließend formstabilisierendes Ausrüsten der resultierenden Teilchen, Abfiltrieren, Waschen und Trocknen des Niederschlags, Tempern bei 500 bis 850°C während 30 bis 300 Minuten und Reduktion des dabei entstehenden Materials zu Metallteilchen mittels gasförmiger Reduktionsmittel bei Temperaturen zwischen 200 und 500°C lösen läßt.

Gemäß der Erfindung wird somit das an sich bekannte Verfahren der Ausfallung von $\alpha$-FeOOH dadurch abgewandelt, daß zu der eingesetzten Eisen(II)salzlösung 0,1 bis 4,0 Gew.-% Zinkionen, bezogen auf die Menge des stöchiometrisch entstehenden FeOOH, zugesetzt werden. Üblicherweise werden als Eisen(II)salze Eisen(II)sulfat und als Zinksalz Zinksulfat verwendet. In einer besonderen Ausgestaltung des erfindungsgemäßen Verfahrens werden in dieser ersten Stufe der Reaktionslösung noch Phosphationen in einer Menge zwischen 0,01 bis höchsten 3,0 Gew.-% zugesetzt, wobei die Menge an Phosphationen deutlich kleiner als die der Zinkionen sein muß, da bei etwa gleichen Mengen der beiden zugesetzten Ionen die magnetischen Eigenschaften des Endprodukts des erfindungsgemäßen Verfahrens sich verschlechtern würden. Aus der derart bereiteten Ausgangslösung werden nun durch Zugabe von Lauge 30 bis 70, vorzugsweise 40 bis 60% der Eisen(II)ionen unter gleichzeitiger Oxidation eines Teils des zweiwertigen Eisens mit Oxidationsmitteln, üblicherweise durch Einleiten von Luft, zu $\alpha$-FeOOH-Keimen oxidiert. Als Laugen kommen die herkömmlichen, wie z.B. Natronlauge in Frage. Diese Fällungs- und Oxidationsreaktion wird bis zum Abfall des pH-Wertes der Suspension auf unter 4,0 fortgeführt. Dann werden 0,1 bis 4,0, vorzugsweise 1,0 bis 2,5 Gew.-% Phosphationen, bezogen auf die Menge an FeOOH-Endprodukt, unter Beibehalten des pH-Wertes von unter 4,0 zugesetzt. Unter erneuter kontinuierlicher Zugabe von Lauge wird der pH-Wert auf größer 4,5 und bis zu 6,0 eingestellt und die restlichen Eisen(II)ionen auf die $\alpha$-FeOOH-Keime aufgefällt (Wachstumsphase). Danach wird der pH-Wert auf größer 8,0 angehoben und zur $\alpha$-FeOOH-Suspension eine Nickelsalzlösung gegeben. Als Nickelsalze sind die Sulfate und Chloride geeignet, wobei die Menge zwischen 1,0 und 8,0 Gew.-% Nickelionen, bezogen auf das vorhandene $\alpha$-FeOOH, beträgt.

Dieses nach dem erfindungsgemäßen Verfahren besonders modifizierte und behandelte $\alpha$-FeOOH wird nun mit einer formstabilisierenden Ausrüstung versehen. Hierfür eignet sich beispielsweise das Aufbringen eines $SiO_2$-Niederschlags auf die Teilchenoberfläche in einer Menge von 1,0 bis 6,0 Gew.-%, bezogen auf die Menge $\alpha$-FeOOH, durch Aufbringen des $SiO_2$ in der $\alpha$-FeOOH-Suspension bei Zugaben von Wasserglas bei einem pH-Wert von über 8,0. Weitere formstabilisierenden Ausrüstungen sind bekannt. An diese Ausrüstung schließt sich die Entwässerung und dann die Temperung des abfiltrierten, gewaschenen und getrockneten $\alpha$-FeOOH bei Temperaturen zwischen 500 und 850°C während 30 bis 300 Minuten an. Die bei der Temperung erhaltenen Eisenoxid-Teilchen werden nun mit gasförmigen Reduktionsmitteln, z.B. mit Wasserstoff bei Temperaturen zwischen 200 und 500°C zum Metall reduziert. Zuletzt wird dieses feinteilige Metallpulver zweckmäßigerweise durch eine kontrollierte Oxidation der Oberfläche passiviert und somit handhabbar.

Die erfindungsgemäß hergestellten Metallteilchen weisen die aufgabengemäß geforderten Eigenschaften auf und eignen sich in hervorragender Weise als magnetisches Material für magnetische Aufzeichnungsträger, insbesondere für die Speicherung von Videosignalen, aber auch für Audio- und Datenmedien. Die Herstellung der Speichermedien geschieht in an sich bekannter Weise. Hierzu wird das Metallpulver zusammen mit den üblichen Zusatzstoffen wie Dispergierhilfsmitteln, Natrium- oder Zinkoleat, Natriumlaureat, -palmitat, -stearat, sowie gegebenenfalls nichtmagnetischen Füllstoffen, wie Quarzmehl, Pulver auf Silicatbasis, Aluminium- oder Zirkonoxid und den in organischen Lösungsmitteln gelösten Bindemitteln, wie z.B. elastomeren Polyurethanen, Epoxiharzen, Vinylchlorid/-, Vinylacetat-Copolymeren, mit Isocyanaten vernetzten, OH-Gruppen-haltigen Polyurethanen sowie Mischungen davon, in einer Dispergiereinrichtung, wie einer Topf- oder Rührwerksmühle, zu einer Dispersion verarbeitet. Die Magnetdispersion wird anschließend mit Hilfe üblicher Beschichtungsmaschinen auf den nichtmagnetischen Träger aufgebracht. Als nichtmagnetische Träger lassen sich die üblichen Trägermaterialien verwenden, insbesondere Folien aus linearen Polyestern wie Polyethylenterephthalat, im allgemeinen in Stärken von 4 bis 20 µm. Bevor die noch flüssige Beschichtungsmischung auf dem Träger getrocknet wird, werden die anisotropen Magnetteilchen durch die Einwirkung eines Magnetfeldes entlang der vorgesehenen Aufzeichnungsrichtung orientiert. Anschließend werden die Magnetschichten durch Hindurchführen zwischen geheizten und polierten Walzen geglättet und verdichtet. Die Dicke der Magnetschicht beträgt im allgemeinen 2 bis 6 µm.

Anhand der folgenden Beispiele soll das erfindungsgmäße Verfahren näher erläutert werden, ohne dadurch die Ansprüche in irgendeiner Weise einzuschränken.

Die magnetischen Werte des Eisenpulvers wurden mit einem Schwingmagnetometer in einem Magnetfeld von 160 kA/m nach Vormagnetisierung in einem Impulsmagnetisierer gemessen. Die Werte der Koerzitivfeldstärke, gemessen in [kA/m], wurden bei den Pulvermessungen auf eine Stopfdichte von $\rho = 1,6$ g/cm³ bezogen. Die spezifische Remanenz $Mr/\rho$ ist in [nTm³/g] angegeben. Die mittlere Länge der Teilchen wurde aus elektronenmikroskopischen Aufnahmen ermittelt.

Das Aufzeichnungsverhalten der mit den erfindungsgemäß hergestellten magnetischen Materialien hergestellten magnetischen Aufzeichnungsträgern wurde im Video-Bereich durch Messungen am Schleifenlaufwerk erfaßt. Es wurde ein Meßaufbau mit feststehenden Videoköpfen und einer rotierenden Endlos-Magnetbandschlaufe verwendet, mit der ein gleichzeitiges Aufsprechen und Wiedergeben möglich ist. Die Messungen sind auf ein Referenzband bezogen.

Als Meßgrößen zur Charakterisierung der einzelnen Bänder dienten das Luminanz-Signal/Rausch-Verhältnis (HF-S/N, Trägerpegel bei 4,5 MHz zu Rauschpegel bei 3,5 MHz, gemessen mit 30 kHz Bandbreite) sowie das Chrominanz-Signal/Rausch-Verhältnis (CR-S/N, Farbträgerpegel bei 0,75 MHz zu Rauschpegel bei 0,65 MHz, gemessen mit 30 kHz Bandbreite). Die Größen werden aus Frequenzgangskurven entnommen, die erhalten werden, indem eine Trägerfrequenz von 5 MHz, welche bei kleinem Modulationsindex so in der Phase moduliert ist, daß sich zwei gleiche Seitenbänder konstanter spektraler Signaldichte (insgesamt von 0 bis 10 MHz) ergeben, im optimalen Arbeitspunkt des Bandes aufgezeichnet wird.

Bei der Messung beträgt die Band/Kopf-Relativgeschwindigkeit 3,2 m/s; zur Wiedergabe wurde ein Ferrit-, zum Schreiben ein Sendust-Kopf verwendet.

Beispiel 1

In einem 10 l Glasgefäß mit Rührer, Temperatur- und pH-Regelung und Gaseinleitungsvorrichtung für Stickstoff und Luft wurden unter Durchleiten von Stickstoff 5,5 l Wasser mit 3,2 ml konz. $H_2SO_4$ angesäuert und 1222 g chemisch reines $FeSO_4 . 7H_2O$ darin gelöst. In dieser Lösung wurden zusätzlich 12,8 g $ZnSO_4 . 7H_2O$ sowie 1,1 g $NaH_2PO_4 . 2H_2O$ gelöst. Die Reaktionsmischung wurde auf 40°C thermostatisiert. Anschließend wurden mit einer Schlauchpumpe 1010 ml einer 15 gew.%igen NaOH-Lösung zugepumpt, entsprechend einem Ausfallgrad von 50 % Fe(II). Die Gaszufuhr wurde auf Luft umgestellt und bei 40°C die Keimbildung durchgeführt, bis der pH-Wert auf einen Wert unter 4,0 gefallen war. Es erfolgte eine Zugabe von 10,0 g $NaH_2PO_4 . 2H_2O$ zu der Reaktionsmischung. Anschließend wurde bei einem pH-Wert von 5,5 der Wachstumsprozeß durchgeführt. Nach abgeschlossener Wachstumsphase wurde bei pH = 9 eine Lösung von 110 g $NiSO_4 . 6H_2O$ in 300 ml $H_2O$ zugepumpt, 30 Minuten nachgerührt, eine Lösung von 54,5 g Wasserglas (26 gew.%ige Lösung) in 200 ml $H_2O$ zugegeben und nochmals einige Zeit nachgerührt. Die Suspension von α-FeOOH wurde über eine Nutsche abgesaugt und gewaschen; die Trocknung des Filterkuchens erfolgte bei 110°C im Vakuumtrockenschrank.

Das erhaltene α-FeOOH wurde im Drehkolben im Stickstoffstrom bei 750°C während 90 Minuten getempert und dann im Drehrohr bei 410°C im Verlaufe von 8 h mit Wasserstoff zum Metallpulver reduziert, das schließlich mit einem Stickstoff/Luft-Gemisch passiviert wurde.

Das auf diese Weise erhaltene magnetische Material weist folgende Eigenschaften auf:

Oberfläche : 50,1 m²/g
Koerzitivfeldstärke: 109,0 kA/m
spez. Remanenz : 86,2 nTm³/g

Beispiel 2

Es wurde wie im Beispiel 1 beschrieben verfahren, jedoch wurden nach der Keimphase nicht 10,0 g, sondern 15,0 g $NaH_2PO_4 . 2H_2O$ zugesetzt.

Das auf diese Weise erhaltene magnetische Material weist folgende Eigenschaften auf:

Oberfläche : 46,3 m²/g
Koerzitivfeldstärke: 112,0 kA/m
spez. Remanenz : 84,8 nTm³/g

Beispiel 3

Es wurde wie in Beispiel 1 beschrieben verfahren, jedoch wurden 30,0 g $ZnSO_4 . 7H_2O$ zugesetzt.
Die Meßergebnisse waren:

Oberfläche : 48,2 m²/g
Koerzitivfeldstärke: 108,0 kA/m
spez. Remanenz : 85,6 nTm³/g

Beispiel 4

Es wurde wie in Beispiel 1 beschrieben verfahren, jedoch wurde mehr Zinksalz, und zwar 30 g $ZnSO_4 . 7H_2O$, sowie nach der Keimphase 15 g $NaH_2PO_4 . 2H_2O$ zugesetzt.
Die Meßergebnisse waren:

Oberfläche : 50,2 m²/g
Koerzitivfeldstärke: 114,0 kA/m
spez. Remanenz : 91,5 nTm³/g

Beispiel 5

Es wurde wie im Beispiel 4 beschrieben verfahren, jedoch wurden zusammen mit dem Zinksalz kein Phosphat und nach der Keimphase 10 g $NaH_2PO_4$ . $2H_2O$ zugesetzt.
Die Meßergebnisse waren:

Oberfläche : 46,6 m²/g
Koerzitivfeldstärke: 105,0 kA/m
spez. Remanenz : 89,3 nTm³/g

Beispiel 6

Es wurde wie im Beispiel 1 beschrieben verfahren, jedoch wurden zusammen mit dem Zinksalz (30 g $ZnSO_4$ . $7H_2O$) kein Phosphat und nach der Keimbildung 15 g $NaH_2PO_4$ . $2H_2O$ zugesetzt.
Die Meßergebnisse waren:

Oberfläche : 45,9 m²/g
Koerzitivfeldstärke: 106,0 kA/m
spez. Remanenz : 80,5 nTm³/g

Beispiel 7

In einem 250 l Kessel mit Rührer, Temperatur- und pH-Regelung sowie einer Gaseinleitungsvorrichtung für Stickstoff und Luft wurden unter Durchleiten von Stickstoff 108 l Wasser mit 57 ml konz. $H_2SO_4$ angesäuert und 22 kg chemisch reines $FeSO_4$ . $7H_2O$ darin gelöst. Zu dieser Lösung wurden zusätzlich 540 g $ZnSO_4$ . $7H_2O$ und 20 g $NaH_2PO_4$ . $2H_2O$ gegeben und gelöst. Die Reaktionslösung wurde auf 45°C thermostatiert. Anschließend wurden mit einer Pumpe 18 l einer 15 gew.%igen NaOH-Lösung zugepumpt, entsprechend einem Ausfällgrad von 50 % Fe(II). Die Gaszufuhr wurde auf Luft umgestellt und bei 45°C die Keimbildung durchgeführt, bis der pH-Wert unter 4,0 gefallen war. Es erfolgte eine Zugabe von 150 g $NaH_2PO_4$ . $2H_2O$ zu der Reaktionsmischung. Anschließend wurde bei einem pH-Wert von 5,5 der Wachstumsprozeß durchtgeführt.
Nach abgeschlossener Wachstumsphase wurde mit NaOH ein pH-Wert von 9,5 eingestellt, bei diesem pH-Wert eine Lösung von 1075 g $NiSO_4$ . $6H_2O$ in 3 l Wasser zugegeben und 30 Minuten nachgerührt. Schließlich wurde mit einer Lösung von 995 g kolloidalem $SiO_2$, 40 Gew.%ig, in 4 l Wasser formstabilisierend ausgerüstet und nochmals 45 Minuten nachgerührt. Die α(-FeOOH-Suspension wurde über eine Filterpresse filtriert, gewaschen und der Filterkuchen im Vakuumtrockenschrank bei 110°C getrocknet.
Das erhaltene α-FeOOH wurde in einem Drehrohrofen bei 700°C und einer Verweilzeit von 90 Minuten getempert und dann mit Wasserstoff im Drehrohrofen bei 410°C und einer Verweilzeit von 7 h zum Metall reduziert. Schließlich wurde das Metallpulver mit einem Stickstoff/Luft-Gemisch passiviert.
Das auf diese Weise erhaltene magnetische Material wies folgende Eigenschaften auf:

Oberfläche : 34,4 m²/g
Koerzitivfeldstärke : 106,0 kA/m
spez. Remanenz : 90,0 nTm³/g
mittlere Teilchenlänge: 0,08 μm

Beispiel 8

Es wurde wie im Beispiel 7 beschrieben verfahren, jedoch mit folgenden Abänderungen:

a) Zusatz nach Keimphase: 180 g $NaH_2PO_4$ . $2H_2O$
b) Zusatz von 1800 g $NiSO_4$ . $6H_2O$ am Ende der Synthese
c) Ausrüstung mit einer Lösung von 1800 g Wasserglas in 4 l Wasser
d) Temperung bei 720°C
e) Reduktionszeit: 8 h

Das auf diese Weise erhaltene magnetische Material wies folgende Eigenschaften auf.

Oberfläche : 35,5 m²/g
Koerzitivfeldstärke : 109,0 kA/m
spez. Remanenz : 91,6 nTm³/g
mittlere Teilchenlänge: 0,09 μm

Beispiel 9

Es wurde wie im Beispiel 7 beschrieben, jedoch mit folgenden Abänderungen:

a) Dotierung: 230 g $ZnSO_4 . 7H_2O$ (statt 540 g)
b) Zusatz nach Keimphase: 120 g $NaH_2PO_4 . 2H_2O$
c) Zusatz am Ende der Synthese: 1100 g $CoSO_4 . 7H_2O$
d) Ausrüstung mit einer Lösung von 880 ml kolloidalem $SiO_2$ in 4 l Wasser
e) Temperung bei 720°C
f) Reduktionszeit: 8 h

Die Meßergebnisse des resultierenden Materials waren:
Oberfläche : 45,4 $m^2/g$
Koerzitivfeldstärke : 108,0 kA/m
spez. Remanenz : 92,7 $nTm^3/g$
mittlere Teilchenlänge: 0,1 $\mu m$

Beispiel 10

700 Teile eines nadelförmigen Eisenpulvers nach Beispiel 7 bis 9 wurden zusammen mit 91 Teilen eines kugelförmigen $Al_2O_3$-Pulvers mit einem mittleren Teilchendurchmesser von 0,6$\mu m$ in 722,8 Teilen einer 13%igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 201,3 Teilen einer 20%igen Lösung eines Phenoxyharzes aus Bisphenol A und Epichlorhydrin mit einem mittleren Molekulargewicht von 30.000 und einem Hydroxylgruppengehalt von 6 % im obengenannten Lösungsmittelgemisch sowie weiteren 264,1 Teilen dieses Lösungsmittelgemisches in einer 6.000 Volumenteile fassenden, mit 2330 Teilen Kugeln mit einem Durchmesser zwischen 1 und 1,5 mm gefüllten Rührwerksmühle unter Zusatz von 3,5 Teilen Stearinsäure und 55,4 Teilen eines Dispergierhilfsmittels auf der Basis einer Mischung eines ethoxylierten Monophosphorsäureesters und dem Salz eines Sulfobernsteinsäure ethylhexylesters 32 Stunden dispergiert. Anschließend wurden 23,7 Teile Methylstearat zugeführt und nochmals 5 Stunden dispergiert. Nach Beendigung der Dispergierung wurden 46,7 Teile einer 50%igen Lösung eines Triisocyanats, gefertigt aus 3 Mol Toluylendiisocyanat und 1 Mol 1,1,1-Trimethylolpropan in Ethylacetat, hinzugefügt und weitere 15 Minuten gerührt. Nach dem Filtrieren der Dispersion wurde diese schichtförmig auf eine Polyethylenterephthalatfolie unter gleichzeitiger Ausrichtung der Magnetpartikel mittels eines Permanentmagneten aufgetragen. Nach dem Trocknen wurde die Magnetschicht durch Hindurchführen zwischen beheizten Walzen unter Druck (90°C, Liniendruck 200 kg/cm) geglättet und die beschichtete Folienbahn in 1/2 Zoll breite Bänder geschnitten.

Die Messung der magnetischen Eigenschaften wurde in einem Meßfeld von 800 kA/m durchgeführt. Die Videoeigenschaften wurden gegen das $CrO_2$-Bezugsband, GVL 868, auf dem Schleifenlaufwerk ermittelt. Die Meßergebnisse sind in Tabelle 1 angegeben.

| Beispiel | Luminanz | | | Modulations- | Chrominanz | | |
| | Signal | Noise | S/N | Rauschen | Signal | Noise | S/N |
| | [dB] | [dB] | [dB] | [dB] | [dB] | [dB] | [dB] |
|---|---|---|---|---|---|---|---|
| 7 | + 12,0 | + 3,5 | + 8,5 | − 8,0 | + 5,5 | ± 0 | + 5,5 |
| 8 | + 12,0 | + 3,5 | + 8,5 | − 6,5 | + 7,5 | + 1,0 | + 6,5 |
| 9 | + 12,7 | + 4,2 | + 8,5 | − 8,6 | + 7,5 | + 1,5 | + 6,0 |

Vergleichsversuch 1

Es wurde wie im Beispiel 1 beschrieben verfahren, jedoch mit folgenden Abänderungen: a) Dotierung: 30 g $ZnSO_4 . 7 H_2O$, kein Phosphat und b) kein Phosphatzusatz nach der Keimphase.
Die Meßergebnisse waren:

Oberfläche : 41,8 $m^2/g$
Koerzitivfeldstärke : 95,3 kA/m
spez. Remanenz : 87,0 $nTm^3/g$

## Vergleichsversuch 2

Es wurde wie im Beispiel 1 beschrieben verfahren, jedoch mit folgenden Abänderungen: a) Dotierung: 5,1 g $NaH_2PO_4$ . $2H_2O$, kein Zinksulfat und b) keine Phosphatzugabe nach der Keimphase. Die Meßergebnisse waren:
Oberfläche : 43,9 m²/g
Koerzitivfeldstärke : 94,8 kA/m
spez. Remanenz : 91,3 nTm³/g

## Vergleichsversuch 3

Es wurde wie im Beispiel 1 beschrieben verfahren, jedoch ohne jegliche Dotierung. Die Meßergebnisse waren:

Oberfläche : 33,6 m²/g
Koerzitivfeldstärke : 90,1 kA/m
spez. Remanenz : 81,7 nTm³/g

## Vergleichsversuch 4

Es wurde wie im Beispiel 1 beschrieben verfahren, jedoch mit einer Dotierung von 10,0 g $NaH_2PO_4$ . $2H_2O$ (neben 12,8 g $ZnSO_4$ . $7H_2O$) und keiner Phosphat-Zugabe nach der Keimphase. Die Meßergebnisse waren:

Oberfläche : 47,2 m²/g
Koerzitivfeldstärke : 91,7 kA/m
spez. Remanenz : 81,4 nTm³/g

## Vergleichsversuch 5

Es wurde wie im Beispiel 1 beschrieben verfahren, jedoch auf der Basis der DE-B 1176 11 mit einer Dotierung von 10,0 g Phosphat und 30 g $ZnSO_4$ . $7H_2O$ und ohne Phosphat-Zugabe nach der Keimphase. Die Meßergebnisse waren:

Oberfläche : 51,5 m²/g
Koerzitivfeldstärke : 87,4 kA/m
spez. Remanenz : 89,5 nTm³/g

## Patentansprüche

Verfahren zur Herstellung von im wesentlichen aus Eisen bestehenden nadelförmigen ferromagnetischen Metallteilchen durch stufenweises Ausfällen von α-FeOOH in wäßriger Phase, wobei in einer ersten Stufe aus einer wäßrigen, bezogen auf die Menge des stöchiometrisch entstehenden FeOOH, 0,1 bis 4,0 Gew.-% Phosphationen in einem Gewichts-Verhältnis der Zink- und Phosphationen von größer 5 enthaltenden Eisen(II)salzlösung durch Zugabe von wäßrigen Laugen 30 bis 70% der Eisen(II)ionen ausgefällt, dann in einer zweiten Stufe mit Hilfe von Oxidationsmitteln der Niederschlag in α-FeOOH-Keime überführt und anschließend in einer dritten Stufe zu dieser Suspension bei einem pH-Wert von kleiner 4,0 0,1 bis 4,0 Gew.-%, bezogen auf die Menge an FeOOH-Endprodukt, an Phosphationen zugesetzt und anschließend die restlichen Eisen(II)ionen unter erneutem Zusatz von Oxidationsmittel und Lauge auf die α-FeOOH-Keime niedergeschlagen werden, Hinzufügen von Nickel- und/oder Kobaltsalzen zu der resultierenden α-FeOOH-Suspension bei einem pH von größer 8,0 und Umhüllen der α-FeOOH-Teilchen mit Nickel- und/oder Kobalthydroxid sowie anschließend formstabilisierendes Ausrüsten der resultierenden Teilchen, Abfiltrieren, Waschen und Trocknen des Niederschlags, Tempern bei 500 bis 850°C während 30 bis 300 Minuten und Reduktion des dabei entstehenden Materials zu Metallteilchen mittels gasförmiger Reduktionsmittel bei Temperaturen zwischen 200 und 500°C.

## Claims

A process for the preparation of acicular ferromagnetic metal particles essentially consisting of iron by stepwise precipitation of α-FeOOH in the aqueous phase, wherein, in a first stage, from 30 to 70% of the iron(II) ions are precipitated from an aqueous iron(II) salt solution containing, based on the amount of stoichiometric FeOOH, from 0.1 to 4.0% by weight of zinc ions and from 0.01 to 3.0% by weight of phosphate ions in a weight ratio of zinc ions to phosphate ions which is greater than 5, by the addition of an aqueous alkali, then, in a second stage, the precipitate is converted into α-FeOOH seeds with the aid of an oxidizing agent and thereafter, in a third stage, from 0.1 to 4.0% by weight, based on the amount of FeOOH end product, of phosphate ions are added to this suspension at a pH of less than 4.0, and then the remaining iron(II) ions are precipitated onto the α-FeOOH seeds with the further addition of oxidizing agent and alkali, the addition of nickel salts and/or cobalt salts to the resulting α-FeOOH suspension at a pH of greater than 8.0 and coating of the α-FeOOH particles with nickel hydroxide and/or cobalt hydroxide and subsequent shape-stabilizing treatment of the resulting particles, filtering off, washing and drying of the precipitate, heating at from 500 to 850°C for from 30 to 300 minutes and reduction of the resulting material to metal particles by means of a gaseous reducing agent at from 200 to 500°C.

**Revendications**

Procédé de préparation de particules métalliques ferromagnétiques aciculaires constituées essentiellement de fer, par précipitation par étages de α-FeOOH en phase aqueuse, 30 à 70% des ions fer (II) étant précipités, dans une première étape, par addition de lessive aqueuse, d'une solution de sel de fer (II) aqueuse, contenant, rapportés à la quantité de FeOOH qui se forme stochiométriquement, 0,1 à 4,0% en poids de zinc et 0,01 à 3% en poids d'ions phosphate, en un rapport pondéral des ions zinc et phosphate supérieur à 5, puis, dans une deuxième étape, le précipité étant transformé en germes de α-FeOOH à l'aide d'agents d'oxydation et ensuite, dans une troisième étape, 0,1 à 4,0% en poids, rapportés à la quantité de produit final FeOOH, d'ions phosphate étant ajoutés à cette suspension, et ensuite les ions fer (II) restants étant précipités sur les germes de α-FeOOH, sous nouvelle addition d'agent oxydant et de lessive, addition de sels de nickel et/ou cobalt à la suspension de α-FeOOH résultante, à un pH de plus de 8,0 et enrobement des particules de α-FeOOH avec de l'hydroxyde de nickel et/ou cobalt ainsi qu'ensuite, dotation des particules résultantes de moyens de stabilisation de forme, séparation par filtration, lavage et séchage du précipité, traitement entre 500 et 850°C pendante 30 à 300 minutes et réduction de la matière ainsi obtenue en particules métalliques au moyen d'agents de réduction gazeux, à des températures comprises entre 200 et 500°C.